# EUROPEAN PATENT APPLICATION

(11) **EP 4 622 239 A1**
(43) Date of publication of application: **24.09.2025**
(21) Application number: 25162372.4
(22) Date of filing: 07.03.2025
(51) Int. Cl.: H04N 1/00, G06T 13/00, G06T 19/20

(54) **INFORMATION PROCESSING DEVICE AND STORAGE MEDIUM FOR IMAGE PROCESSING**

(30) Priority: 18.03.2024 JP 2024042768
(71) Applicant: Bandai Co., Ltd., Tokyo 111-8081 (JP)
(72) Inventor: KIYOMIYA, Ryota, Tokyo, 108-0073 (JP); INAYOSHI, Taro, Tokyo, 108-0073 (JP)
(74) Representative: Studio Torta S.p.A.

(57) **Abstract**

An information processing device includes circuitry configured to: control a position and an angle of a scanner and scan an appearance of a subject installed on an installation base to generate a scan image; generate three-dimensional model data from the scan image; generate an image in which a three-dimensional model based on the three-dimensional model data is disposed in a virtual space; and receive input of attribute information related to the subject to be scanned and performance of the subject. The circuitry is configured to generate the image so as to include the performance for each subject according to the attribute information.

## Description

### TECHNICAL FIELD

The present invention relates to an information processing device and a storage medium for image processing.

### BACKGROUND

Japanese Patent Application Laid-open Publication No. 2020-107251 discloses a technique in which a texture generated from a captured image group of an object taken from a plurality of directions by an imaging unit is mapped onto a primitive in a virtual space to generate a virtual space image as seen from a virtual camera in the virtual space.

In the generation of the virtual space image as in the technique described above, when the object is imaged and an image in which a three-dimensional model is disposed in the virtual space is generated using three-dimensional model data of the imaged object, it is expected that the generated three-dimensional model data is associated with attribute information of the imaged object to generate an image according to the attribute information.

Therefore, the present invention relates to associating, when an object is imaged and an image in which a three-dimensional model is disposed in a virtual space is generated using three-dimensional model data of the imaged object, the generated three-dimensional model data with attribute information of the imaged object to generate an image according to the attribute information.

### SUMMARY

An aspect of a present invention relates to an information processing device including circuitry configured to: control a position and an angle of a scanner and scan an appearance of a subject installed on an installation base to generate a scan image; generate three-dimensional model data from the scan image; generate an image in which a three-dimensional model based on the three-dimensional model data is disposed in a virtual space; and receive input of attribute information related to the subject to be scanned and performance of the subject. The circuitry is configured to generate the image so as to include the performance for each subject according to the attribute information.

### BRIEF DESCRIPTION OF DRAWINGS

Exemplary embodiments of the present invention will be described in detail based on the following figures, wherein
FIG. 1 is a diagram showing a configuration example of an image processing system 10 according to an embodiment;
FIG. 2A is a diagram showing an example of a hardware configuration of an information processing device 100;
FIG. 2B is diagram showing an example of a hardware configuration of a headset 150 according to the embodiment;
FIG. 3 is a diagram showing an example of an appearance of a doll-shaped model according to the embodiment;
FIG. 4A is a diagram showing an example of implementation of the image processing system 10;
FIG. 4B is a diagram showing a configuration example of the image processing system 10 according to the embodiment during scanning;
FIG. 5A is a diagram illustrating a relationship between a scanner device 413 and a rotation position of a turntable 406 during the scanning according to the embodiment;
FIG. 5B is a diagram illustrating a relationship between a scanner device 413 and a rotation position of a turntable 406 during the scanning according to the embodiment;
FIG. 5C is a diagram illustrating a relationship between a scanner device 413 and a rotation position of a turntable 406 during the scanning according to the embodiment;
FIG. 5D is a diagram illustrating a relationship between a scanner device 413 and a rotation position of a turntable 406 during the scanning according to the embodiment;
FIG. 5E is a diagram illustrating a relationship between a scanner device 413 and a rotation position of a turntable 406 during the scanning according to the embodiment;
FIG. 5F is a diagram illustrating a relationship between a scanner device 413 and a rotation position of a turntable 406 during the scanning according to the embodiment;
FIG. 6 is a flowchart corresponding to an example of a process in the image processing system 10 according to the embodiment; and
FIG. 7 is a diagram showing an example of an attribute designation screen according to the embodiment.

### DESCRIPTION OF EMBODIMENTS

Hereinafter, an embodiment will be described in detail with reference to the accompanying drawings. The following embodiment does not limit the invention according to the claims, and all combinations of features described in the embodiment are not necessarily essential to the invention.

Two or more features of the plurality of features described in the embodiment may be freely combined. The same or similar components are denoted by the same reference numerals, and redundant description thereof is omitted.

In addition, in the drawings, upper, lower, left, right, front, and rear directions with respect to the paper are referred to as upper, lower, left, right, front, and rear directions of a component (or a part) in the present embodiment, and are used in the description of the text.

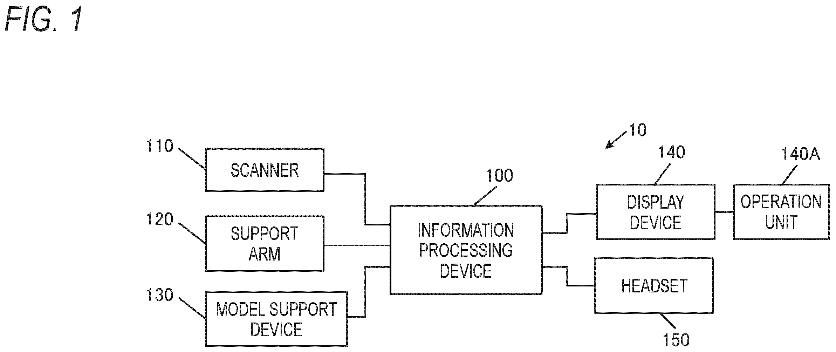

First, a configuration of an image processing system corresponding to the present embodiment will be described. FIG. 1 is a diagram showing an example of a configuration of an image processing system 10 according to the present embodiment. The image processing system 10 is formed by connecting a scanner 110, a support arm 120, a model support device 130, a display device 140, a headset 150, and the like to an information processing device 100. The system configuration is not limited to that illustrated in FIG. 1, and the information processing device 100 may be further connected to an external server, a cloud server, or the like via a network. The external server or the like can execute at least a part of processing of the embodiment to be described below.

The information processing device 100 controls an operation of at least one of the scanner 110, the support arm 120, and the model support device 130, images an article as an imaged object from any angle to generate a plurality of images, and generates three-dimensional model data (present data) from the plurality of images. In a case in which the article as the imaged object is separable into a plurality of constituent articles, the three-dimensional model data may be generated by imaging each of the constituent articles, and the three-dimensional model data of the object article may be generated by integrating the three-dimensional model data.

The information processing device 100 can also function as an image generation device that generates an image to be displayed in a virtual space by using the generated three-dimensional model data as virtual space data. In the present embodiment, a subject to be imaged is an article such as a plastic model that can be assembled, an action figure (figure including movable joints), a toy, a doll, and the like, hereinafter collectively referred to as a "model".

Next, the scanner 110 is a three-dimensional scanner device that images (scans) a three-dimensional shape of the model as the imaged object under control of the information processing device 100 and outputs the three-dimensional shape and color information of the imaged object. In the present embodiment, scan signals output from the scanner 110 are collectively referred to as a "scan image". As the scanner 110, for example, a Space Spider manufactured by Artec 3D may be used. In the present embodiment, for example, 3D scan data of the entire toy can be obtained by obtaining about 500 frames to 800 frames of the scan image. Further, as the scanner 110, for example, a smartphone including a camera with an installed application for imaging the three-dimensional shape may be used.

The support arm 120 is a position and posture control device that moves the scanner 110 to a predetermined imaging position and posture under the control of the information processing device 100. The support arm 120 enables an imaging position and posture to be changed manually, and the changed position and posture to be maintained fixedly. The support arm 120 may be controlled by the information processing device 100. When the support arm 120 is controlled by the information processing device 100, for example, xArm7 manufactured by UFACTORY can be used. The xArm7 includes seven joints and can move in the same manner as a human arm. As an alternative to the support arm 120, the scanner 110 may be positioned manually. Regarding the imaging position and posture that cannot be covered by the support arm 120, the scanning may be performed by manually operating the scanner 110.

The model support device 130 is a support base that supports a model in a fixed pose (or an installation base on which the model is installed). The model support device 130 may be rotatable, for example, with the model installed on the support base or at a tip of a support rod. In the present embodiment, after the scanner 110 is positioned at any imaging position and imaging angle by the support arm 120, the model support device 130 is rotated to perform the imaging. The model support device 130 is rotatable in both clockwise and counterclockwise directions. Further, the model support device 130 can be stopped at any rotation angle between 0 degrees and 360 degrees. It is also possible to stop the model support device 130 at a specific rotation angle and position the model support device 130 at any imaging position and imaging angle within a movable range of the scanner 110 to take images. By taking the images at a plurality of rotation angles, imaging positions, and imaging angles, the images of the entire model can be obtained. Here, by driving the support arm 120 and the model support device 130 in synchronization, imaging processing can be performed more easily and with higher accuracy. Further, instead of using the model support device 130, the scanner 110 may be manually moved around the model to scan the model from any imaging position and imaging angle.

The display device 140 is a display device such as a liquid crystal display (LCD), and is capable of displaying results of processing in the information processing device 100. Specifically, it is possible to display the images obtained by the scanner 110, to display the present data of the three-dimensional model data generated from the captured images, and to display the image (VR image) reconstructed using the present data. Further, a meter can also display progress of performing a scanner process. The display device 140 can include an operation unit 140A that receives an operation from a user who is an observer of the displayed image, and the user can operate the operation unit 140A to perform operation input according to a content of the image displayed on the display device 140.

The headset 150 includes a head-mounted display 150A and a controller 150B, which will be described later. In particular, a VR headset may be capable of providing moving images that correspond to a posture and an inclination of the user who is the observer. A specific application is installed in the headset 150, and application data executed in the application can be downloaded from the information processing device 100 and executed. In the present embodiment, similarly to the information processing device 100, the headset 150 can function as the image generation device that uses the three-dimensional model data as the virtual space data to generate the image to be displayed in the virtual space and provides the generated image as the VR image. The application data includes display data for displaying the VR image.

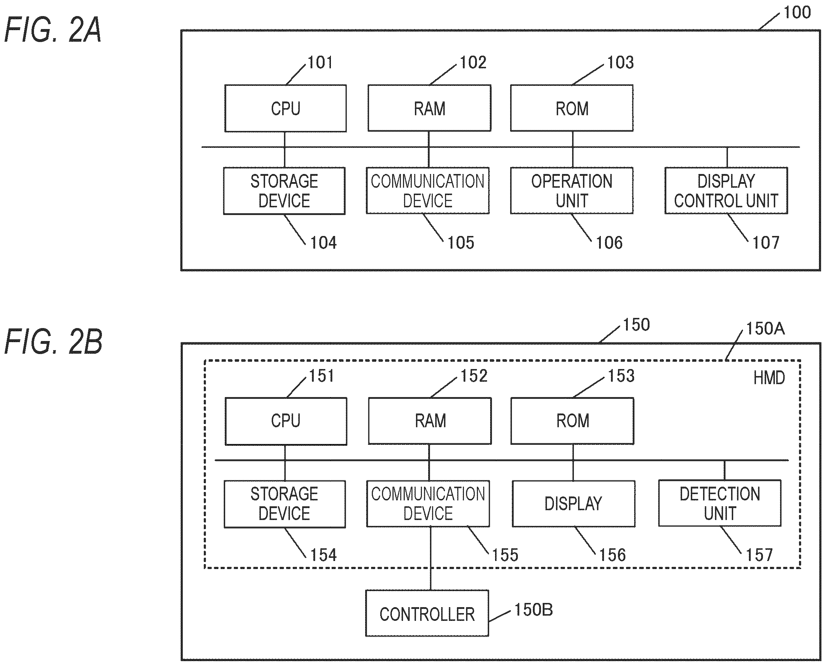

Next, a hardware configuration of the information processing device 100 according to the present embodiment will be described. FIG. 2A shows an example of the hardware configuration of the information processing device 100. A CPU 101 is a device that performs overall control of the information processing device 100 and calculation, processing, and management of data. The CPU 101 is an example of circuitry in the information processing device 100. For example, a timing of capturing the images in the scanner 110 and the number of captured images can be controlled, and a joint of an arm of the support arm 120 can be controlled to position the scanner 110 at any imaging position and imaging angle. For example, after the imaging position and the imaging angle of the scanner 110 are determined, the model support device 130 is rotated, and an imaging operation can be performed by the scanner 110. After the model support device 130 is stopped at a predetermined rotation angle, the scanner 110 can perform the imaging operation at any imaging position and imaging angle.

The CPU 101 can also function as an image processing unit that processes the images output from the scanner 110. Specifically, the CPU 101 can perform a process of generating the image displaying the three-dimensional model in the virtual space by using the three-dimensional model data generated based on the scan signals obtained by the scanner 110 as the virtual space data.

The RAM 102 is a volatile memory, and is used as a temporary storage area such as a main memory and a work area of the CPU 101. A ROM 103 is a non-volatile memory and stores image data and other data, various programs that cause the CPU 101 to operate, and the like in respective predetermined areas. For example, the CPU 101 controls each unit of the information processing device 100 using the RAM 102 as a work memory in accordance with a program stored in the ROM 103. The programs that cause the CPU 101 to operate are not limited to the programs stored in the ROM 103, and may be stored in a storage device 104. The RAM 102, ROM 103 and storage device 104 is an example of a non-transitory and computer-readable storage medium.

The storage device 104 is constituted by, for example, a magnetic disk such as an HDD or a flash memory. The storage device 104 stores an application program, an OS, a control program, a related program, a game program, and the like. The storage device 104 can read or write data under the control of the CPU 101. The storage device 104 may be used instead of the RAM 102 and the ROM 103.

The communication device 105 is a communication interface for communicating with the scanner 110, the support arm 120, the model support device 130, the display device 140, and the headset 150 under the control of the CPU 101. The communication device 105 may be further capable of communicating with the external server or the like. The communication device 105 may include a wireless communication module, and the module may include a well-known circuit mechanism including an antenna system, an RF transceiver, one or more amplifiers or tuners, one or more oscillators, a digital signal processor, a CODEC chip set, a subscriber identification module card, a memory, and the like. Here, communication between the information processing device 100, the scanner 110, the support arm 120, the model support device 130, the display device 140, and the headset 150 may be performed via wireless communication.

The communication device 105 may also include a wired communication module for wired connection. The wired communication module enables communication with another device including the display device 140 via one or more external ports. Further, various software components that process data may be included. The external port is connected to other devices directly, such as via Ethernet, USB, or IEEE 1394, or indirectly via a network. Software for achieving the same functions as those of the above devices may be used as a substitute for a hardware device.

An operation unit 106 includes, for example, a button, a keyboard, a touch panel, a controller, and the like, and receives an operation input from the user. The operation unit 106 may be shared with the operation unit 140A or may be independent from the operation unit 140A. For example, when the operation unit 140A is assumed to be an operation unit configured as a keyboard, a mouse, or the like, the operation unit 140A can be shared with the operation unit 106. On the other hand, when the operation unit 140A is assumed to be an operation unit configured as a touch panel, a controller, or the like, the operation unit 140A can be a separate operation unit from the operation unit 106.

A display control unit 107 functions as a control unit that displays information on the display device 140 connected to the information processing device 100, and controls an operation of the display device 140. Some functions of the operation unit 106 may be provided in the display device 140. For example, the display device 140 may be configured as a device including a touch panel such as a tablet terminal.

Next, a hardware configuration of the headset 150 corresponding to the present embodiment will be described. FIG. 2B illustrates an example of the hardware configuration of the headset 150. The headset 150 includes the head-mounted display (HMD) 150A and the controller 150B. The HMD 150A provides a right eye image and a left eye image to left and right eyes of the user, respectively, and enables a virtual reality (VR) experience by creating a sense of stereoscopic effect due to parallax between the videos. The controller 150B is provided in a housing independent of the HMD 150A. The controller 150B is assumed to be configured as a pair of two controllers to be held in left and right hands of the user for operation, but may be a single controller.

A CPU 151 is a device that performs overall control of the headset 150 and calculation, processing, and management of the data. For example, the application data downloaded from the information processing device 100 can be executed to display the VR image on a display 157. Further, based on an operation received via the controller 156 or information detected by a detection unit 158, it is possible to switch the VR image itself to be displayed, switch a viewpoint in the VR space, or change a position in the VR space.

A RAM 152 is a volatile memory, and is used as a temporary storage area such as a main memory and a work area of the CPU 151. A ROM 153 is a non-volatile memory and stores image data and other data, various programs that cause the CPU 151 to operate, and the like, in respective predetermined areas. For example, the CPU 151 controls each unit of the headset 150 using the RAM 152 as a work memory in accordance with a program stored in the ROM 153. The programs that cause the CPU 151 to operate are not limited to the programs stored in the ROM 153, and may be stored in a storage device 154.

The storage device 154 is constituted by, for example, a magnetic disk such as an HDD or a flash memory. The storage device 154 stores application programs, an OS, control programs, related programs, game programs, the application data and the display data downloaded from the information processing device 100, and the like. The storage device 154 can read or write data under the control of the CPU 151. The storage device 154 may be used instead of the RAM 152 and the ROM 153.

A communication device 155 is a communication interface for communicating with the information processing device 100 and the controller 150B under the control of the CPU 151. The communication device 155 includes a wireless communication module that enables wireless communication based on Bluetooth or WiFi (IEEE802.11). The headset 150 can be connected to the information processing device 100 by the wireless communication to download the display data of the VR image. Further, the headset 150 communicates with the controller 150B and receives information on an operation instruction of the user to the controller 150B.

A display 156 provides the right eye image and the left eye image generated by the CPU 151 to the right eye and the left eye of the user, respectively. A detection unit 157 is a mechanism that detects sight directions of the left and right eyes of the user and detects an inclination of the head-mounted display. The detection unit 157 includes, for example, a sensor that detects a sight direction or a gaze direction of a user wearing the HMD 150A. Further, a gyroscope, a magnetometer, an accelerometer, a global positioning system (GPS), a compass, and the like are provided, and a position, a posture, an inclination, and the like of the HMD 150A can be identified according to detection information thereof. The detection unit 157 detects information for determining the gaze direction and an action of the user in the HMD 150A and transmits the information to the CPU 151. The CPU 151 determines the gaze direction and the action based on the received detection information, and adjusts the image presented on the display 156 of the HMD 150A so as to match the determined gaze direction and action.

The controller 150B includes, for example, a plurality of buttons and a cross key, and receives an operation input such as a selection operation and a direction instruction operation from the user. The controller 150B is wirelessly connected to the HMD 150A via the communication device 155.

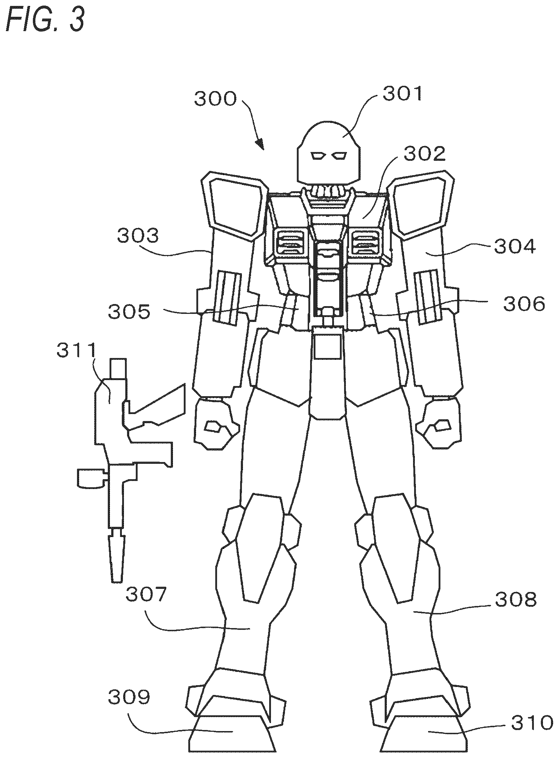

Next, with reference to FIG. 3, an example of the model as the subject to be imaged and an accessory thereof in the present embodiment will be described. A model 300 is a model having a doll-shaped (robot, or human) appearance. The model may be, for example, a plastic model that has been assembled and painted. Alternatively, the model may be a completed model, such as a figure (action figure) including movable joints. The model in FIG. 2 is merely an example for purposes of illustration, and a shape of the model is not limited to those having a doll-shaped appearance, and may be a model having any shape such as a general vehicle, a race vehicle, a military motor vehicle, an aircraft, a ship, an animal, and a virtual living body. Of course, the article to be imaged is not limited to the model as long as the article is an article whose three-dimensional shape can be imaged by the scanner 110.

The model 300 includes a head portion 301, a chest portion 302, a right arm portion 303, a left arm portion 304, a right body portion 305, a left body portion 306, a right leg portion 307, a left leg portion 308, a right foot portion 309, and a left foot portion 310, and these components are connected to each other. At least a part of the individual portions 301 to 310 are supported in a manner of being rotatable (or swingable) with respect to adjacent portions. For example, the head portion 301 is rotatably supported on the chest portion 302, and the right arm portion 303 and the left arm portion 304 are rotatably supported on the chest portion 302. Thus, since a joint structure is provided in each portion of the model 300, so that the model 300 can take any posture.

An accessory 311 is attached to the model 300. The accessory 311 is an accessory part assumed to be used together with the model 300, and is a weapon having a rifle shape in an example of FIG. 3. That is, it is assumed that the model 300 uses the accessory 311 by holding the accessory 311 with both hands. A form of the weapon is not limited to the rifle form, and may include any form such as a sword shape, a shield shape, a bomb shape (for example, a hand grenade), and a bazooka shape. Further, the accessory is not limited to the weapon as long as the accessory is an accessory part can be used together with the model 300, and may be a decoration. For example, when the model 300 is a doll-shaped model of a specific character, various items carried by the character (for example, baggage, a hat, a bag, an accessory, a smartphone, and any other article that can be carried by the character) may be used.

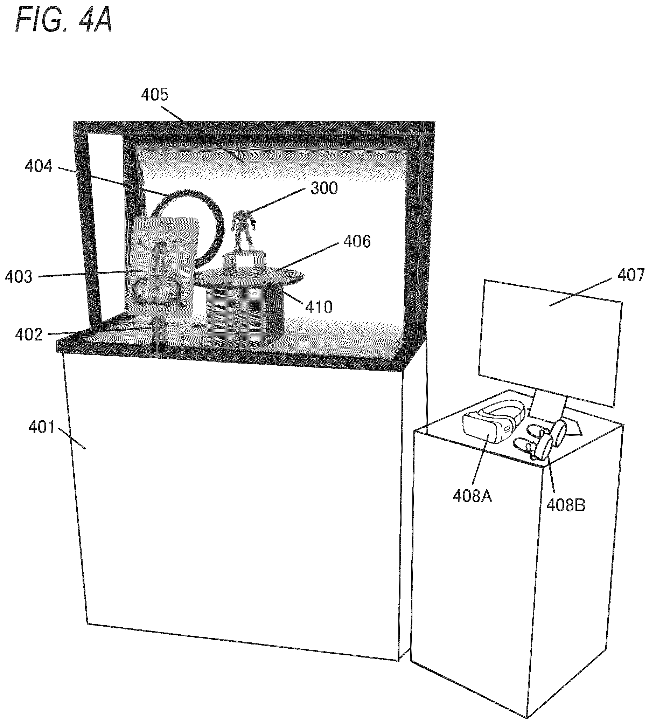

Next, an overall implementation of the image processing system 10 according to the present embodiment will be described with reference to FIG. 4A. FIG. 4A is a diagram showing a generalized implementation capable of generating the present data generated by imaging the model.

In FIG. 4A, a case 401 includes the information processing device 100, a drive system that drives the support arm 402, a drive system that drives a turntable 406, and the like. An imaging direction and position of the support arm 402 can also be manually adjusted. A surface of the case 401 has a flat structure so that an advertising poster can be attached.

The support arm 402 corresponds to the support arm 120, and can support a terminal 403 functioning as the scanner 110 under the control of the information processing device 100 or manually, and fix a position thereof. The support arm 402 can also operate to control an inclination of the terminal 403.

The terminal 403 is a touch panel terminal with a built-in camera that can be used as the scanner 110, and for example, a smartphone, a tablet terminal, a digital camera, or the like can be used. Instead of these terminals, Space Spider manufactured by Artec 3D can also be used. FIG. 4A is merely a diagram showing a generalized example of a system configuration, and the configuration can be made according to a type of device used as the scanner 110. The terminal 403 can capture an image of the model 300 and transmit the image to the information processing device 100. A ring light 404 is an illumination device used when the model 300 is imaged by the terminal 403, and can uniformly irradiate the model 300 with light to reduce appearance of shadows. In addition to the ring light 404, a top light and auxiliary lights on the left, right, and bottom may be installed as additional light sources. Instead of the terminal 403, the three-dimensional scanner device as described above may be used.

A background sheet 405 is a background sheet for imaging, and for example, a white sheet can be used. The turntable 406 can rotate the model 300 mounted thereon. A configuration including the turntable 406 and the drive system thereof corresponds to the model support device 130, and the turntable 406 is rotated clockwise and counterclockwise and stopped under the control of the information processing device 100. A plurality of predetermined markers 410 may be disposed on the turntable 406. The markers 410 can be used for adjusting an orientation and a position of the imaged model.

In FIG. 4A, the model is installed on a translucent (transparent) table, but in addition to this, for example, a support tool called "action base" (registered trademark) may be used. In the action base, a column formed to be bent in a dogleg shape is installed on a pedestal, and the model can be attached to a tip of the column. At this time, the above-described markers 410 may be disposed at a tip portion of the column. A method for indicating the model can be changed according to the pose. For example, in the case of an upright posture, the model can be installed on the transparent table to perform imaging. On the other hand, in a case where it is desired to image a sole of a foot as in a flying posture, the action base may be used. The action base may be used for imaging the upright posture.

A display device 407 is a device corresponding to the display device 140, and may have a touch panel function. The user can perform a predetermined selection operation using the touch panel function. Further, it is also possible to receive operations using a controller or a mouse (not shown) that can function as the operation unit 140A instead of the touch panel. The VR headset 408 includes an HMD 408A and a controller 408B, and corresponds to the HMDs 150A and 150B. The user can wear the HMD 408A on a head thereof and hold and operate the controller 408B by left and right hands, thereby performing operations while viewing the VR image.

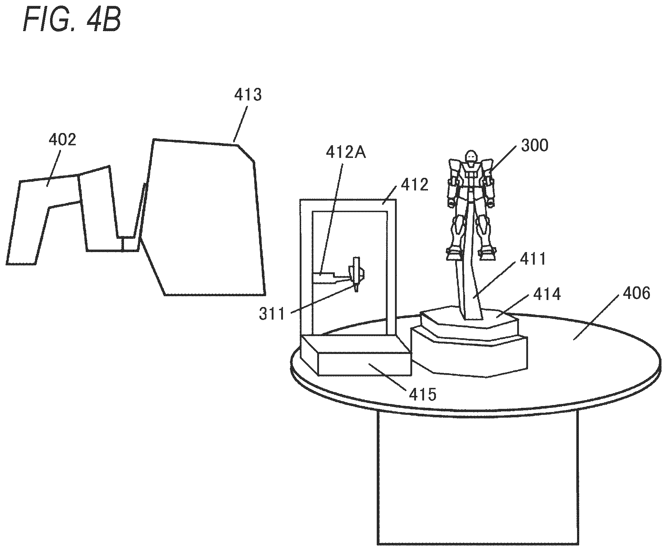

Next, with reference to FIG. 4B, a more specific configuration of the image processing system 10 in the case in which the model 300 and the accessory 311 are scanned simultaneously, which corresponds to the present embodiment, will be described. In FIG. 4B, the model 300 and the accessory 311 are installed on the turntable 406. The model 300 is supported by an action base 411 and is disposed substantially at a center of the turntable 406. The accessory 311 is supported by a support member 412A in the frame 412, and is disposed adjacent to the model 300 and in the vicinity of an end of the turntable 406. An indicating member 412A may be, for example, a clip-shaped member. Accordingly, the accessory 411 can be supported within the frame 412 by clipping the accessory 411.

A scanner device 413 is supported by the support arm 402, and it is assumed here that Space Spider manufactured by Artec 3D is used. The drive system that drives the support arm 402, the drive system that drives the turntable 406, and the like are similar to those described in FIG. 4A, and therefore a description thereof will be omitted. In the present embodiment, the turntable 406 is capable of rotating in both the clockwise and counterclockwise directions.

In the present embodiment, the model 300 and the accessory 311 are installed together on the turntable 406 in a form shown in FIG. 4B, and are imaged together by the scanner device 413 to generate the scan image. The scan image includes both the model 300 and the accessory 311, but the three-dimensional model data is generated by separating these.

The frame 412 supporting the accessory 311 is formed as a frame body surrounding the accessory 311, and is used as an index for identifying a range in which the accessory 311 is disposed. That is, a three-dimensional object existing inside the frame 412 is identified as the accessory 311. It is desirable that a thickness of the frame 412 be as thin as possible while maintaining strength so as to block a sight direction of the scanner device 413 as little as possible. For example, the thickness may be about 3 mm.

The model 300 and the frame 412 are disposed apart from each other so as to ensure a certain distance. Depending on the rotation angle of the turntable 406, the frame 412 may be positioned in front of the model 300 with respect to the scanner device 413, blocking the imaging of the model 300. Such blocked portions are required to be complemented at a different rotation angle, but since accuracy of the complementation decreases if the model 300 and the frame 412 are too close, a certain distance is maintained to ensure the accuracy of the complementation.

In this case, in order to ensure the certain distance between the model 300 and the frame 412 (or to prevent the model 300 and the frame 412 from being too close), for example, sizes of the model 300 and the accessory 311 may be limited to sizes which are respectively equal to or smaller than a predetermined size. For example, the size of the model 300 can be 15 cm in length, 15 cm in width, and 10 cm or less in depth, and the size of the accessory 311 can be 15 cm in length, 5 cm in width, and 2 cm or less in thickness.

In the present embodiment, in an installation base 414 on which the action base 411 supporting the model 300 is installed and an installation base 415 on which the frame 412 supporting the accessory 311 is installed, the installation base 414 is thicker. That is, the model 300 is installed so as to be located relatively above the accessory 311. As an example, the model 300 can be installed such that at least an upper body or an upper half is positioned above the frame 412. Accordingly, when the model 300 is scanned, a proportion of the model 300 blocked by the accessory 311 is reduced, and a success rate of scanning can be increased.

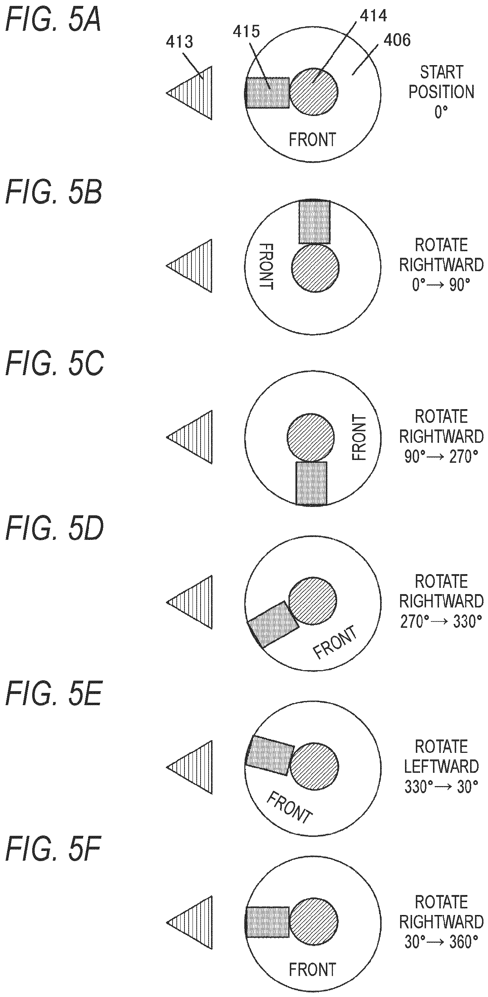

Next, a cooperative operation of the turntable 406 and the support arm 120 during the scanning corresponding to the present embodiment will be described with reference to FIG. 5. FIG. 5 is a diagram showing a relationship between a rotation direction and a rotation amount of the turntable 406 relative to the scanner device 413 and the installation bases 414 and 415. In FIG. 5, the model 300 installed on the installation base 414 is disposed such that a direction described as the front is a front surface. The same can be applied to the accessory 311 disposed on the installation base 415.

FIG. 5A shows a relationship between the scanner device 413 and the installation bases 414 and 415 at a start position of a scanning operation. The rotation angle of the turntable 406 at this time point is set to 0 degrees as a reference. When the turntable 406 rotates 90 degrees rightward (clockwise) from this state, a state is shown in FIG. 5B. During the transition from FIG. 5A to FIG. 5B, the scanner device 413 is located on the side of the turntable 406 and scans the model 300 and the accessory 311. Further, in the state shown in FIG. 5B in which front surfaces of the model 300 and the accessory 311 are positioned on a front side of a scanning device 413, the support arm 402 is operated to a movable range limit to scan the front surfaces, left and right side surfaces, flat surfaces, and bottom surfaces of the model 300 and the accessory 311.

Next, from the state in FIG. 5B, the turntable 406 is rotated rightward from a position of 90 degrees to a position of 270 degrees. During this period, the model 300 and the accessory 311 are scanned. Further, in the state shown in FIG. 5C in which rear surfaces of the model 300 and the accessory 311 are positioned on the front side of the scanning device 413, the support arm 402 is operated to the movable range limit to scan the rear surfaces, the left and right side surfaces, the flat surfaces, and the bottom surfaces of the model 300 and the accessory 311.

Next, from the state in FIG. 5C, the turntable 406 is further rotated rightward from the position of 270 degrees to a position of 330 degrees. During this period, the model 300 and the accessory 311 are scanned. Further, in a state shown in FIG. 5D, and the support arm 402 is operated to the movable range limit from obliquely right rear sides of the model 300 and the accessory 311 to scan the model 300 and the accessory 311. By this scanning, it is possible to perform scanning so as to complement portions of an appearance of the model 300 blocked by the frame 412 and the accessory 311 (surfaces of the model 300 on a side on which the frame 412 and the accessory 311 are disposed). Here, a case in which the scanning is performed from the obliquely right rear side is described, but the scanning may be performed from the obliquely right front side.

Next, from the state in FIG. 5D, the turntable 406 is rotated leftward (counterclockwise) from the position of 330 degrees to a position of 30 degrees. During that period, the scanning device 413 is positioned diagonally above the model 300 and the accessory 311 so as to provide a bird's-eye view, and the scanning is performed. Further, a state is shown in FIG. 5E. Further, from the state shown in FIG. 5E, the turntable 406 is rotated rightward (clockwise) from the position of 30 degrees to a position of 360 degrees. During that period, the scanning device 413 is positioned diagonally below the model 300 and the accessory 311 so as to provide a worm's eye view, and the scanning is performed. Finally, it reaches a state shown in FIG. 5F.

When "fighting/punching" is selected in setting of an attribute 720 of the accessory to be described later, the accessory 311 is not installed including the frame 412. In this case, since the accessory 311 is not installed, the above-mentioned operation of rotating the turntable from FIG. 5E back to FIG. 5F may be omitted. At that time, the scanning may be terminated midway without rotating from the position of 330 degrees to the position of 30 degrees in FIG. 5E. For example, the rotation may be terminated at 360 degrees or at an angle less than 30 degrees (for example, 5 degrees, 10 degrees, and the like). As described above, a first scanning range when the accessory 311 is installed is different from a second scanning range when the accessory 311 is not installed, and the first scanning range is larger (or wider) than the second scanning range. If the frame 412 remains, the above-mentioned operation of rotating the turntable from FIG. 5E back to FIG. 5F may not be omitted.

In the scanner device 413 assumed to be used in the present embodiment, the scanning is performed at a substantially intermediate position (for example, a distance between the scanner device 413 and the model 300 is about 130 mm) with respect to a scannable range (for example, a distance of 90 mm to 180 mm) of the scanner device 413. In this case, if the accessory 311 passes between the scanner device 413 and the model 300, there is a risk of a problem in that the accessory 311 blocks the model 300, causing a scanned target to be lost. However, as described above, by performing the scanning by rotating the turntable 406 rightward and also rotating the turntable 406 leftward in the reverse direction and performing the scanning so as to complement a blocked range, it is possible to reliably obtain three-dimensional model data of each of the model 300 and the accessory 311 without losing the scanned target.

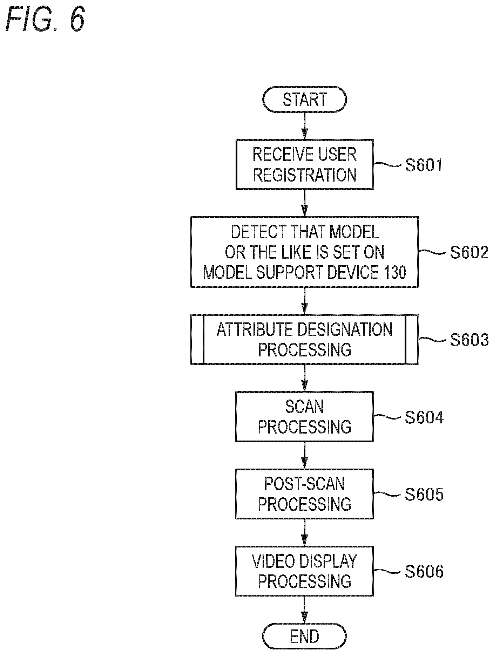

Next, an example of a process executed by the image processing system 10 according to the present embodiment will be described with reference to FIG. 6. At least a part of the process corresponding to the flowchart is achieved by the CPU 101 of the information processing device 100 executing the program stored in the ROM 103 or the storage device 104.

First, in S601, the CPU 101 receives user registration. The CPU 101 receives input of a name and contact information of the user. A user identifier is assigned to each user to uniquely identify the individual user. The CPU 101 stores the input user information in the storage device 104 in association with a time when the input is received and the user identifier.

When the user registration is completed, the user sets an own model in the model support device 130. The CPU 101 can determine whether the model 300 and the accessory 311 are set on the model support device 130 based on the scan image from the scanner 110. Alternatively, a switch that is turned on when the model 300 and the accessory 311 are set on the model support device 130 may be provided, and the CPU 101 may detect a signal from the switch to make a determination. Alternatively, a button for receiving an operation when the setting of the model 300 and the accessory 311 is completed is displayed on the display device 140, and the CPU 101 can detect whether an operation corresponding to the button has been received. In S602, the CPU 101 detects that the model 300 and the accessory 311 are set on the model support device 130 by any of the methods described above. In response to this detection, the process proceeds to S603.

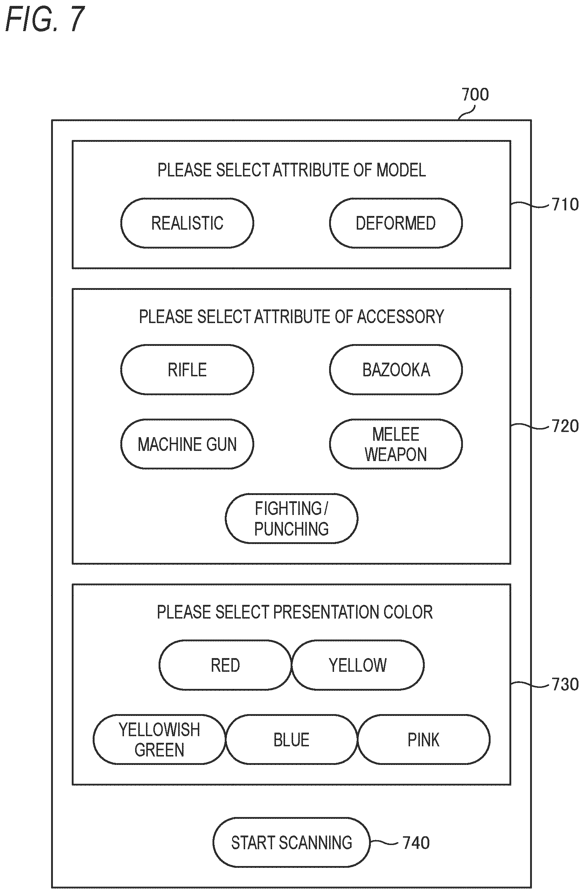

In the attribute 720 of the accessory in FIG. 7 to be described later, since there are cases in which an attack performance is done without using the accessory 311, if a certain time elapses after at least the model 300 is set and the setting of the accessory 311 is not detected, the process may proceed to S603. Alternatively, whether the accessory 311 is set may be detected only when the frame 412 is set.

In S603, processing of receiving designation of attributes of the model 300 and the accessory 311 is executed. Here, for example, a screen 700 as shown in FIG. 7 can be displayed, and selection of an attribute (type) of the model to be scanned, an attribute (type) of the accessory, and colors (performance colors) to be used for performance of the subject and the accessory can be received.

The screen 700 in FIG. 7 can be displayed on the display device 140, for example, to receive operation input from the user. In the display of the screen 700, the user can select either "realistic" or "deformed" for the attribute 710 of the model. Since characteristics of the appearance of the model differ between the realistic and deformed models, a scanning method can also be selected according to the selected attribute of the model. For example, in the case of the deformed model, a range in which the scanner device 413 is operated may be set narrower than in the case of the realistic model. In the attribute 710 of the model, a scale value (1/144, 1/100, 1/60) of the model may be further designated. Accordingly, it is possible to further set the operating range of the scanner device 413 in accordance with the scale of the model.

Next, regarding the attribute 720 of the accessory, the accessory is assumed here to be the weapon, and it is possible to select from "fighting/punching", which uses a body part such as a fist as the weapon, or a "rifle", a "machine gun", a "bazooka", or a "melee weapon" such as a sword as a ranged weapon. The attributes of the weapon shown in FIG. 7 are merely examples, and the attributes can be designated in greater detail than these. The attribute 720 of the accessory in the present embodiment corresponds to designation of a performance type using the accessory and the designation related to the presence or absence of the accessory. That is, as a way of performance, it is possible to designate any one of performance using the ranged weapon such as a "rifle", a "machine gun", or a "bazooka", performance using a "melee weapon" such as a sword, or performance of punching without a use of a weapon. Further, if "fighting/punching" is designated, it is indicated that there is no accessory, and if any other attribute is designated, it is indicated that the corresponding accessory is present. In the present embodiment, different performance is executed depending on these designated attributes, respectively.

In the case of using the body part, in addition to punching, a kick, an operation of rotating an arm or a foot, or an attack using another part of the body may be performed, and these may be selected as the attribute of the weapon. Furthermore, when "fighting/punching" is designated as the attribute 720 of the accessory, the scanning of the accessory 311 to be described below may be omitted, or the scanning of the accessory 311 may be performed in the same manner as when the ranged weapon or the melee weapon is designated. Although FIG. 7 shows only the weapon for attack, attributes such as a weapon for defense and a shield may be specified. As the performance color 730, any one of red, yellow, yellowish green, blue, and pink can be selected. The performance colors shown in FIG. 7 are merely examples, and colors other than those shown here can be designated.

If it is not detected in S602 that the accessory 311 has been set, only "fighting/punching" may be selectable. Alternatively, when it is detected in S602 that the accessory 311 has been set, "fighting/punching" may be made unselectable or selectable.

A scan start button 740 is displayed on the screen 700, and the user can give an instruction to start the scanning when the above-described designation of the attributes 710 to 730 is completed. When the start of the scanning is instructed, the process proceeds to S604. At this time, attribute information input via the screen in FIG. 7 is stored in the storage device 104 in association with the user information. When the scan start button 740 is operated, a screen showing progress of the scanning is displayed on the display device 140. The user can grasp a progress status of the scanning by referring to the screen. The screen includes a message (message notifying the user of a current status, such as "scanning" or "post-scan processing"), a progress meter displaying the progress (displaying the progress as a percentage in the form of a pie chart or a bar graph), and the like. Further, a scan button for stopping the scanning may be included.

In step S604, as described with reference to FIG. 5, the scanner 110, the support arm 120, and the model support device 130 execute scan processing (imaging processing) in cooperation with one another to generate the scan image. Specifically, the CPU 101 controls the support arm 120 to move the scanner 110 to any one of registered imaging positions, and the scanner 110 can perform the scanning at that imaging position while the model support device 130 is rotated. After the model support device 130 is stopped at the predetermined rotation angle, the scanner 110 can perform the imaging operation at any imaging position and imaging angle. In S604, the scanning operation can be switched depending on the type of the attribute received in the attribute 720 of the accessory in S603. That is, when an attribute other than "fighting/punching" is selected, the accessory 311 is installed, and thus a first scanning operation corresponding to that case is executed. On the other hand, when "fighting/punching" is selected, the accessory 311 is not installed, and thus a second scanning operation corresponding to that case is executed. The first scanning operation is performed in the first scanning range described above, and the second scanning operation is performed in the second scanning range described above. The captured scan image is transmitted to the information processing device 100, and the CPU 101 stores the scan image in a table of the storage device 104 in association with the user identifier or the like.

In subsequent S605, the CPU 101 performs post-scan processing on the scan image obtained by the scanning process, generates the three-dimensional model data of each of the model 300 and the accessory 311, and generates the application data (display data) for image display. Here, in a case in which "fighting/punching" is designated as the attribute 720 of the accessory, the three-dimensional model data of the accessory 311 is not generated, and in a case in which other "rifle", "machine gun", "bazooka", and "melee weapon" are designated, the three-dimensional model data of the accessory 311 is generated. Furthermore, in generating the three-dimensional model data, when the three-dimensional model data of the accessory 311 is generated, the three-dimensional model data of the accessory 311 is associated with a hand position of the three-dimensional model data of the model 300. On the other hand, when the three-dimensional model data of the accessory 311 is not generated, such association is not performed.

Specifically, grip portions of the rifle, the machine gun, and the bazooka are associated with a hand position of the model 300. At this time, an angle at which the model 300 grips the ranged weapon is also set. Further, a handle portion of the melee weapon such as a saber or a sword is associated with the hand position of the model 300, and an angle at which the model 300 grips the melee weapon is also set. Accordingly, it is possible to generate three-dimensional model data of the model 300 holding the accessory 311. When "fighting/punching" is designated as the attribute 720 of the accessory, the association processing is omitted.

In the post-scan processing, a region defining a range of unnecessary data is created in advance, and surfaces in the region in which the data is not required to be read are deleted. Accordingly, surfaces other than the model 300 and the accessory 311 can be substantially removed. The unnecessary data range includes regions where the action base 411, the installation base 414, the frame 412, the support member 412A, the installation base 415, and the like are located.

When the generated application data is executed in a specific application on the information processing device 100, the generated application data can play the image (or a video). Further, when the generated application data is executed in the specific application on the head-mounted display 150A, the generated application data can play the VR image (or a VR video). The generated three-dimensional model data and display data are stored in the storage device 104 in association with the user information together with the attribute information received in S603.

In the next step S606, image display processing is executed. When the image display processing is performed in the information processing device 100, the CPU 101 executes the display data in a corresponding specific application, and displays the image on the display device 140 via the display control unit 107. Further, in step S606, the CPU 101 controls the communication device 105 to transmit the display data to the HMD 150A, and the CPU 151 of the HMD 150A executes a corresponding application using the received display data to display the VR image, so that the image display processing may be performed.

At the time of image display, it is possible to switch performance for the subject or the accessory according to the attribute information. For example, when the attribute designated in the attribute 720 in FIG. 7 is any one of the machine gun, the rifle, and the bazooka, performance is displayed in which the body is moved with a motion corresponding to each ranged weapon, and a bullet is fired from the ranged weapon. In this case, different performance may be made for each attribute information, such as by varying a size of bullets, an amount of bullets fired per unit time, and a bullet speed in each performance display of the machine gun, the rifle, and the bazooka. Further, in this case, the bullets are displayed in the color designated by the presentation color.

When the attribute is the "melee weapon", performance is displayed in which the body is moved in a motion corresponding to the melee weapon such as a saber or an axe, and a slash is fired from the melee weapon in response to the weapon being swung. In this case, the slash is displayed in the color designated by the performance color. Further, when the attribute is "fighting/punching", performance is displayed in which the body performs a punching motion, and in response to the punching motion, an energy bullet or an attack wave equivalent to the slash from the melee weapon is fired from the fist. Similarly, when the kick can be designated, performance is displayed in which an energy bullet or an attack wave is fired from a fist in response to a kicking motion. In this case, the attack is displayed in the color designated by the performance color.

In FIG. 6, the case in which the designation of the attribute information is received before the start of the scan processing has been described, but the embodiment is not limited thereto, and the designation of the attribute information may be received after the scan processing in step S604 or the post-scan processing in step S605.

In the present embodiment, a notification unit that notifies a status of the process in FIG. 6 can be provided. For example, an LED tape may be attached to at least one of the turntable 406, the action base 411, the installation base 414, the installation base 415, and the like, and the notification may be performed by causing the LED tape to emit light in different colors according to processing steps during the process in FIG. 6. For example, the LED tape may emit light of a first emission color (for example, red) during processing in S601 and S602, and the LED tape may emit light of a second emission color (for example, blue) while input from the user is being received in S603. Thereafter, when the user operates the scan start button 740, the LED tape may emit light of a third emission color (for example, white). The LED tape may continue to emit light during each processing, or may emit light for a fixed period of time (for example, 5 seconds or 10 seconds) and then be turned off.

As described above, in the present embodiment, when the three-dimensional model data generated from the image obtained by imaging the model by the scanner is disposed in the virtual space to generate the display data for displaying the image, the model and the accessory thereof are simultaneously imaged to generate the three-dimensional model data, and the three-dimensional model data can be used in the virtual space together with the three-dimensional model data of the model.

Further, in the present embodiment, since the designation of the attribute information can be received for the type and the presence or absence of the accessory, when the three-dimensional model of the accessory is used in the virtual space, it is possible to make performance according to the received attribute. Accordingly, the user can reflect the own image in the performance related to the accessory, thereby preventing the user from feeling uncomfortable. Furthermore, the designation of the type of model can also be received as the attribute information, so that the scanning range can be controlled according to the type of model, making it possible to obtain a more accurate scan image.

Although the above embodiment has been described on the assumption that the accessory is the weapon, the type of accessory is not limited to the weapon. For example, when the model is a specific human character, the accessory may be a costume or an accessory worn by the character. Further, it is also possible for the model to appear in events, concerts, sports, online conferences, and the like performed in the virtual space. Further, the technique of the present embodiment can also be applied to an image technique in which a real world such as a crosstalk (XR) is fused with a virtual world, and an object that does not exist in the real space can be perceived.

As described above, in the present embodiment, it is possible to generate the three-dimensional model data from the image obtained by imaging the appearance of the model and the accessory thereof, and view the image in which the three-dimensional model is disposed in the virtual space. Some models and accessories, such as prefabricated plastic models, are finished by the user as an own unique work by painting and the like, and this individuality can be reflected in the character representation in a video or a virtual space, greatly improving the preference of the user.

### <Summary of Embodiment>

The above embodiment discloses at least the following information processing device and storage medium.
(1) An information processing device including:
   circuitry configured to:
   control a position and an angle of a scanner and scan an appearance of a subject installed on an installation base to generate a scan image;
   generate three-dimensional model data from the scan image;
   generate an image in which a three-dimensional model based on the three-dimensional model data is disposed in a virtual space; and
   receive input of attribute information related to the subject to be scanned and performance of the subject, in which
   the circuitry is configured to generate the image so as to include the performance for each subject according to the attribute information.
   When an object is imaged and an image in which a three-dimensional model is disposed in a virtual space is generated using three-dimensional model data of the imaged object, the three-dimensional model data can be generated in association with attribute information of the imaged object, and an image corresponding to the attribute information can be generated.
(2) The information processing device according to (1), in which
   the attribute information includes first attribute information representing a type of the subject and second attribute information related to the performance, and
   the circuitry is configured to generate the image so as to include the performance for each subject according to the first attribute information and the second attribute information.
(3) The information processing device according to (2), in which
   the second attribute information includes information indicating a type of the performance.
(4) The information processing device according to (3), in which
   the type of performance includes one or more types of performance among a plurality of different types of performance, and each type of performance includes a different performance image.
(5) The information processing device according to any one of (2) to (4), in which
   the subject is a subject among a first subject and a second subject, and the second subject is an accessory of the first subject,
   the first attribute information represents a type of the first subject, and
   the second attribute information includes a type of the second subject used for the performance.
(6) The information processing device according to (5), in which
   the second attribute information indicates that the second subject is present by indicating the type of the accessory, and
   the second attribute information indicates that the second subject is not present by indicating that a part of the first subject is used for the performance.
(7) The information processing device according to (5) or (6), in which
   the circuitry is configured to perform processing of associating the second subject with a predetermined position of the first subject from a first scan image of the first subject and a second scan image of the second subject, and generate the three-dimensional model data such that the first subject holds the second subject.
(8) The information processing device according to (7), in which
   the second attribute information further indicates the presence or absence of the second subject,
   when the second attribute information indicates that the second subject is not present, the scan image of the second subject is not generated, and
   the data generation unit generates the three-dimensional model data from the first scan image without performing the processing of associating the second subject with the predetermined position of the first subject.
(9) The information processing device according to any one of (5) to (8), in which
   the scan image of the second subject is generated when the second attribute information indicates that the second subject is present.
(10) The information processing device according to any one of (5) to (9), in which
   the circuitry is configured to differentiate a first scanning range scanned when the second subject is installed on the installation base from a second scanning range scanned when the second subject is not installed on the installation base, and the first scanning range is larger than the second scanning range.
(11) The information processing device according to (5) or (10), further including:
   the circuitry is further configured to detect whether the second subject is installed on the installation base, and
   the circuitry does not receive the second attribute information indicating the type of the accessory, when installation of the second subject is not detected.
(12) The information processing device according to any one of (5) to (11), in which
   the first subject is a doll-shaped model, and the second subject is an accessory part of the model.
(13) The information processing device according to any one of (2) to (12), in which
   the second attribute information further includes information on a color used for the performance.
(14) The information processing device according to any one of (1) to (13), further including:
   the circuitry is configured to notify of an operation state of the information processing device, wherein
   the circuitry is configured to notify that the information processing device is in at least one of a state in which the information processing device is receiving the input of the attribute information and a state in which the scanning is being performed.
(15) A computer program that causes a computer to function as the information processing device according to any one of (1) to (14).

## Claims

1. An information processing device comprising:
circuitry configured to:
control a position and an angle of a scanner and scan an appearance of a subject installed on an installation base to generate a scan image;
generate three-dimensional model data from the scan image;
generate an image in which a three-dimensional model based on the three-dimensional model data is disposed in a virtual space; and
receive input of attribute information related to the subject to be scanned and performance of the subject, wherein
the circuitry is configured to generate the image so as to include the performance for each subject according to the attribute information.

2. The information processing device according to claim 1, wherein
the attribute information includes first attribute information representing a type of the subject and second attribute information related to the performance, and
the circuitry is configured to generate the image so as to include the performance for each subject according to the first attribute information and the second attribute information.

3. The information processing device according to claim 2, wherein
the second attribute information includes information indicating a type of the performance.

4. The information processing device according to claim 3, wherein
the type of performance includes one or more types of performance among a plurality of different types of performance, and each type of performance includes a different performance image.

5. The information processing device according to claim 4, wherein
the subject is a subject among a first subject and a second subject, and the second subject is an accessory of the first subject,
the first attribute information represents a type of the first subject, and
the second attribute information includes a type of the second subject used for the performance.

6. The information processing device according to claim 5, wherein
the second attribute information indicates that the second subject is present by indicating the type of the accessory, and
the second attribute information indicates that the second subject is not present by indicating that a part of the first subject is used for the performance.

7. The information processing device according to claim 6, wherein
the circuitry is configured to perform processing of associating the second subject with a predetermined position of the first subject from a first scan image of the first subject and a second scan image of the second subject, and generate the three-dimensional model data such that the first subject holds the second subject.

8. The information processing device according to claim 7, wherein
the second attribute information further indicates the presence or absence of the second subject,
the scan image of the second subject is not generated when the second attribute information indicates that the second subject is not present, and
the circuitry is configured to generate the three-dimensional model data from the first scan image without performing the processing of associating the second subject with the predetermined position of the first subject.

9. The information processing device according to claim 8, wherein
the scan image of the second subject is generated when the second attribute information indicates that the second subject is present.

10. The information processing device according to claim 9, wherein
the circuitry is configured to differentiate a first scanning range scanned when the second subject is installed on the installation base from a second scanning range scanned when the second subject is not installed on the installation base, and the first scanning range is larger than the second scanning range.

11. The information processing device according to claim 10, wherein
the circuitry is further configured to detect whether the second subject is installed on the installation base, and
the circuitry does not receive the second attribute information indicating the type of the accessory, when installation of the second subject is not detected.

12. The information processing device according to claim 11, wherein
the first subject is a doll-shaped model, and the second subject is an accessory part of the model.

13. The information processing device according to claim 12, wherein
the second attribute information further includes information on a color used for the performance.

14. The information processing device according to claim 13, wherein
the circuitry is configured to notify of an operation state of the information processing device, wherein
the circuitry is configured to notify that the information processing device is in at least one of a state in which the information processing device is receiving the input of the attribute information and a state in which the scanning is being performed.

15. The information processing device according to claim 1, wherein
the circuitry is configured to transmit data of the generated image to a display device to enable the display device to display the generated image.

16. The information processing device according to claim 2, wherein
The circuitry is configured to control the position and the angle of the scanner to change a range scanned by the scanner according to the first attribute information.

17. A non-transitory computer-readable storage medium storing a computer program that causes a computer to function as the information processing device according to claim 1.
